# FASCICULE DE BREVET EUROPEEN

(11) **EP 3 634 753 B1**
(45) Date de publication et mention de la délivrance du brevet: **06.03.2024**
(21) Numéro de dépôt: 18735666.2
(22) Date de dépôt: 07.06.2018
(51) Int. Cl.: C09J 7/22, C09J 7/40, B05D 1/40, B29C 41/00

(54) **PROCEDE DE FABRICATION D'UN FILM MULTICOUCHE DE RECOUVREMENT**
VERFAHREN ZUR HERSTELLUNG EINER MEHRSCHICHTIGEN DECKFOLIE
METHOD FOR PRODUCING A MULTILAYER COVERING FILM

(30) Priorité: 08.06.2017 FR 1755094
(43) Date de publication de la demande: 15.04.2020
(73) Titulaire: Hexis SA, 34110 Frontignan (FR)
(72) Inventeur: GUYON, Vincent, 34070 Montpellier (FR); BAUDRION, Christophe, 34140 Bouzigues (FR); MATEU, Michel, 34540 Balaruc Le Vieux (FR)
(74) Mandataire: Rhein, Alain
(86) Numéro de dépôt international: PCT/FR2018/051333
(87) Numéro de publication internationale: WO 2018/224788

(56) Documents cités:
- WO-A1-2006/076116
- WO-A1-2006/076116

## Description

La présente invention entre dans le domaine des solutions de recouvrement d'une surface bidimensionnelle et/ou d'une surface tridimensionnelle.

De manière connue, des solutions de recouvrement sous forme de film recouvrent des objets bi et tridimensionnels en vu de leur décoration, protection contre les agressions extérieures, ou encore pour apporter des propriétés remarquables à l'objet en question (filtre UV, revêtement antibactérien, antigravillonnage, résistance à la rayure, protection contre les vents de sable etc.).

De manière générale, un film multicouche de recouvrement comporte, d'une part, une couche polymérique formant un corps de film qui confère au film multicouche ses propriétés physico-chimiques, mécaniques et optiques remarquables telles que l'opacité, l'imprimabilité, la souplesse, la couleur, d'autre part, une couche adhésive qui présente des propriétés viscoélastiques spécifiques lui permettant de solidariser de manière semi-permanente le film de recouvrement à l'objet ou à la surface à recouvrir.

Lors de sa fabrication, la couche adhésive du film multicouche de recouvrement est recouverte d'un liner amovible facilement séparable qui a pour fonction de protéger la couche adhésive lors de son transport ou de son stockage avant que le film multicouche de recouvrement ne soit installé sur un objet bi ou tridimensionnel.

Une méthode d'application de ces films multicouches s'est considérablement développée, il s'agit d'une application par étirement du film multicouche qui présente des propriétés importantes d'élasticité. Avantageusement, un professionnel formé à cette méthode d'application est en mesure d'installer un film multicouche sur un objet bi ou tridimensionnel de dimensions indifférentes avec un minimum de matériel.

Un inconvénient de ce type d'installation réside dans la durée d'installation nécessaire pour recouvrir parfaitement l'objet bi ou tridimensionnel. Ce problème est illustré par le coût de l'installation d'un tel film multicouche qui représente une part prépondérante dans le coût total de recouvrement d'un objet ou d'une surface. De plus, lorsque le professionnel réalisant l'installation effectue un mauvais positionnement du film, il est contraint de réaliser une opération d'ajustement de la pose, qui consiste à décoller et repositionner le film sur l'objet à recouvrir. Afin que le film de recouvrement soit positionné correctement, une opération d'ajustement de la pose peut être répétée un certain nombre de fois avec pour conséquence de détériorer les propriétés physico-chimiques, mécaniques et visuelles du film de recouvrement.

Dans l'optique de diminuer la durée d'installation de ce type de film de recouvrement en facilitant notamment les opérations d'ajustement de la pose, plusieurs solutions ont été imaginées. Chaque solution présente le même objectif, fabriquer un film de recouvrement qui présente des particules de matière non-adhérente à la surface de la couche adhésive qui est destinée à être placée au contact de l'objet bi ou tridimensionnel à recouvrir. Avantageusement, ces particules de matière non-adhérente s'intercalent entre la couche adhésive et la surface de l'objet à recouvrir. Limiter le contact de la couche adhésive avec la surface de l'objet à recouvrir permet de faciliter les opérations de réajustement de la pose. L'installation du film multicouche de recouvrement est plus rapide et permet de réduire la détérioration de propriétés remarquables du film multicouche de recouvrement. L'effet recherché par l'apport de matière non-adhérente est de permettre une glissance du film multicouche au contact de la surface de l'objet à recouvrir lors du positionnement du film multicouche.

Dans ce document, la notion de glissance signifie que lorsque la couche adhésive du film multicouche est placée au contact de l'objet à recouvrir sans qu'une pression soit appliquée sur le film multicouche, la couche adhésive n'adhère pas à la surface de l'objet à recouvrir. En effet, les particules qui se trouvent à la surface de la couche adhésive empêchent l'adhésif d'adhérer à la surface de l'objet à recouvrir. Le film multicouche de recouvrement peut ainsi glisser à la surface de l'objet à recouvrir de manière à être positionné correctement. Une fois le film multicouche de recouvrement placé dans une position voulue, l'installateur applique une pression sur le film multicouche qui permet à la couche adhésive d'entrer en contact avec la surface de l'objet à recouvrir et d'y adhérer.

Une première solution consiste à appliquer de la matière non-adhérente directement à l'état liquide sur la couche adhésive selon un motif régulier ou aléatoire. L'application est réalisée de manière générale par jet d'encre à l'aide d'un outil d'impression spécifique. La matière non-adhérente est projetée sur la couche adhésive, puis est durcie en général par réticulation UV, avant que le liner ne soit laminé sur la couche adhésive équipée en surface de la matière non-adhérente à l'état réticulée.

Une deuxième solution consiste à appliquer la matière non-adhérente à l'état liquide sur une face du liner selon un motif régulier ou aléatoire. De la même manière, l'application est réalisée préférentiellement par jet d'encre, suivie d'une étape opération de durcissement de la matière non-adhérente généralement réalisée à l'aide d'une réticulation UV. La face du liner qui comporte la matière non-adhérente est ensuite laminée sur la couche adhésive du film de recouvrement. Il est à noter que la face du liner recouverte de matière non-adhérente peut être embossée avant que la couche adhésive ne soit couchée sur le liner.

Un inconvénient de ces deux solutions réside dans la mise en oeuvre de ces procédés de fabrication qui requiert pour un industriel des investissements importants dans des équipements spécifiques tels qu'un outil d'impression piloté par un logiciel de manière à appliquer la matière non-adhérente selon des motifs prédéterminés ou aléatoires. Ou encore des unités d'embossage de manière à embosser le liner afin d'insérer les particules de matière non-adhérente dans la couche adhésive. Dans certain cas, une seconde étape d'embossage peut être réalisée pour former des canaux d'évacuation de l'air ou « air egress ». Or, l'embossage est une opération délicate qui ralentie le procédé de fabrication. En effet, de par, leur vitesse d'exécution, des unités d'embossage peuvent être un problème si elles sont mises oeuvre dans le cadre d'un procédé de fabrication en ligne qui comporterait par exemple une étape de formation de la matière non-adhérente par projection dont le fonctionnement est plus rapide.

Il est également connu des solutions similaires décrites dans le document WO2006/076116.

Dans ce contexte, la demanderesse a développé une solution alternative au travers d'un procédé de fabrication ingénieux qui met en oeuvre des outils peu onéreux et courant pour un fabricant de films multicouches de recouvrement.

A ces fins, l'invention concerne un procédé de fabrication d'un film multicouche de recouvrement qui comporte une couche adhésive sensible à la pression protégée par un liner qui est équipé d'un système de contrôle d'adhésion, le procédé comportant une étape de formation du système de contrôle d'adhésion qui comprend une opération de placement sélectif d'une composition polymère d'une matière non-adhérente dans des microcavités ménagées sur une face du liner, caractérisé en ce que l'opération de placement sélectif est réalisée par enduction à l'aide d'un outil d'étalement réglé à une hauteur déterminée de la face du liner, afin que l'outil d'étalement contraigne, à son passage, la composition de la matière non-adhérente à remplir et se concentrer uniquement dans les microcavités.

Ainsi, l'opération de placement sélectif est facile à mettre en oeuvre, rapide et utilise un matériel industriel courant pour une entreprise spécialisée dans la production de solution de recouvrement.

En outre, selon un premier mode de réalisation de l'invention, l'étape de formation du système de contrôle d'adhésion comprend une opération de durcissement de la composition polymère de la matière non-adhérente qui se solidifie alors qu'elle est placée dans les microcavités de la face du liner.

Avantageusement, l'outil d'étalement est réglé à une hauteur de la face du liner qui est comprise entre 0 um et 100 um, de préférence l'outil d'étalement est réglée à une hauteur de la face du liner comprise entre 0 um et 10 um, de préférence l'outil d'étalement est réglée à une hauteur de la face du liner comprise entre 0 um et 5 um et de préférence l'outil d'étalement est réglée à une hauteur de la face du liner comprise entre 0 µm et 2 um. L'utilisation d'un outil d'étalement pour réaliser l'enduction de la composition polymère de la matière non-adhérente s'inscrit dans une démarche de conception d'un procédé de fabrication rapide et facile à mettre en oeuvre dans le cadre d'une entreprise spécialisée dans la production de solution de recouvrement.

Selon un deuxième mode de réalisation de l'invention, la composition polymère de la matière non-adhérente présente une tension de surface faible qui est comprise entre 10 mN/m et 60 mN/m.

La tension de surface est un paramètre important, elle définit au moins en partie la faculté de la composition polymère de la matière non-adhérente à remplir dans les microcavités. Ainsi, une tension de surface faible comprise entre 10 mN/m et 60 mN/m permet d'augmenter le pourcentage de remplissage des microcavités ménagées au sein de la face du liner.

Selon un troisième mode de réalisation de l'invention, la composition polymère de la matière non-adhérente est formée par un polymère thermoplastique en phase solvant. Suivant ce mode réalisation, l'opération de durcissement de la composition polymère de la matière non-adhérente est réalisée par élimination du solvant, de préférence l'élimination du solvant résulte d'une évaporation par séchage physique du solvant.

Selon un quatrième mode de réalisation de l'invention, la composition polymère de la matière non-adhérente comporte des monomères précurseurs d'un polymère non-adhérent. Suivant ce mode de réalisation, l'opération de durcissement de la composition polymère de la matière non-adhérente comprend une opération de polymérisation des monomères précurseurs du polymère non-adhérent.

Selon une option du quatrième mode de réalisation de l'invention, l'opération de polymérisation est réalisée par réticulation, de préférence la réticulation est UV catalysée. Selon un cinquième mode de réalisation de l'invention, la composition polymère de la matière non-adhérente est formée par un polymère en fusion. Suivant ce mode de réalisation, l'opération de durcissement est réalisée par refroidissement du polymère en fusion.

Selon un sixième mode de réalisation de l'invention, le procédé de fabrication comporte, d'une part, une étape de formation de la couche adhésive qui est de préférence réalisée par enduction d'une formulation de polymère adhésif sur le liner qui est équipé du système de contrôle d'adhésion, et d'autre part, une opération de durcissement de la formulation de polymère adhésif.

Selon un septième mode de réalisation de l'invention, le procédé de fabrication comporte une étape de formation d'une couche polymérique formant un corps du film, l'étape de formation de la couche polymérique étant de préférence réalisée par couchage d'un film coulé.

Avantageusement, le liner joue un rôle de vecteur du système de contrôle d'adhésion en véhiculant la matière non-adhérente insérée à l'état solide dans les microcavités de la face du liner vers la couche adhésive du film multicouche.

De manière remarquable, lorsque le liner est séparé de la couche adhésive, le système de contrôle recouvre une surface de 0,5 % à 10% de la surface totale de la couche adhésive.

D'autres particularités et avantages apparaîtront dans la description détaillée, qui suit, d'un exemple, non limitatif, de réalisation de l'invention qui est illustré dans les trois figures placées en annexe et dans lesquelles :
- la figure 1 correspond à une représentation schématique d'une coupe d'un film de recouvrement obtenu selon un procédé de fabrication conforme à l'invention ; et
- les figure 2 et 3 correspondent à une vue en coupe d'une cinématique d'une étape de formation d'un système de contrôle d'adhésion qui est réalisée par une opération d'enduction sur une face d'un liner.

La présente invention a trait à un procédé de fabrication d'un film multicouche 1 de recouvrement.

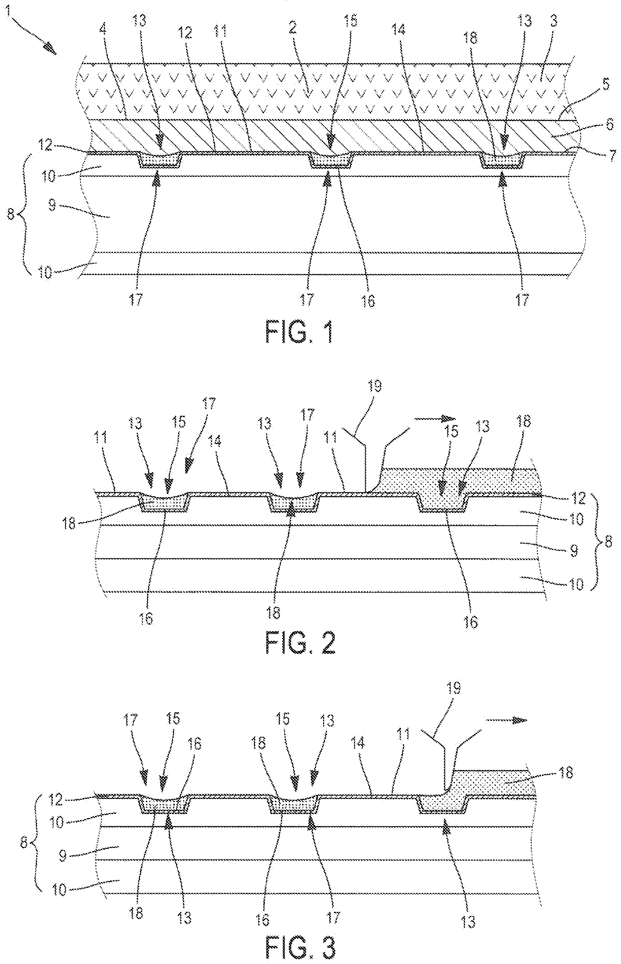

Dans l'exemple illustré à la figure 1, le film multicouche 1 comporte une couche polymérique principale 2 formant un corps 3 du film. Le corps 3 du film confère au film multicouche 1 ses propriétés physico-chimiques, mécaniques et optiques.

Selon l'application pour laquelle est destiné le film multicouche 1, l'épaisseur de la couche polymérique principale 2 peut varier entre 10 um et plus de 1000 µm. Ici, la couche polymérique principale 2 présente une épaisseur comprise entre 30 um et 100 µm.

Dans cet exemple la couche polymérique principale 2 peut être réalisée par exemple avec un polymère de type polychlorure de vinyle, polyuréthane, polyoléfine ou acrylique.

Dans l'optique de recouvrir de manière semi-permanente un objet bi ou tridimensionnel, une première face 4 du corps 3 du film est associée à une face de liaison 5 d'une couche adhésive 6 qui présente des propriétés adhésives lui permettant d'adhérer durablement à tout type de support ou d'objet. Ici, la couche adhésive 6 présente une épaisseur comprise entre 10 um et 100 µm, de préférence comprise entre 20 µm et 50 um et de préférence comprise entre 30 µm et 40 um. La couche adhésive 6 est formée par un adhésif sensible à la pression de manière à ce que le film multicouche 1 puisse être installé sur un objet et positionné par étirement.

L'adhésif sensible à la pression peut être formé par plusieurs types de dérivé polymérique qui peuvent être choisis parmi un composé adhésif à base de polymère acrylique, polymère de polyuréthane, polymère acétate de vinyle/éthylène, polymère acétate de vinyle/éthylène/acrylique, silicone, caoutchouc naturel et caoutchouc synthétique tels que le caoutchouc styrènebutadiène (SBR) ou le caoutchouc styrène-isoprène-styrène (SIS), le caoutchouc styrène-éthylène-butylène-styrène (SEBS).

De manière générale, les composés adhésifs précités peuvent également être utilisés seuls ou mélangés avec des résines tackifiantes comme les dérivés de colophanes et les dérivés d'hydrocarbures.

Dans l'objectif de conserver les propriétés remarquables adhésives de la couche adhésive 6 depuis la fabrication du film multicouche 1 jusqu'à son installation sur un objet, un liner 8 est laminé sur une face d'adhésion 7 de la couche adhésive 6. La face d'adhésion 7 est opposée à la face de liaison 5.

Le liner 8 protège la couche adhésive 6 lors du stockage et du transport du film multicouche 1 jusqu'à ce que le film multicouche 1 soit posé sur un objet ou une surface. A ce titre, le liner 8 présente un caractère amovible de manière à ce qu'un professionnel puisse facilement le séparer de la face d'adhésion 7 lors de l'installation du film multicouche 1.

Comme illustré aux figures 1 à 3, le liner 8 peut être constitué d'un film polymère ou d'une feuille de papier, le liner 8 peut être simple couche ou multicouche, de préférence le liner 8 est multicouche. Ici, le liner 8 est multicouche et comporte une base 9 formée par un film de papier kraft.

Dans cet exemple, la base 9 présente une épaisseur comprise entre 50 µm et 200 um, de préférence entre 80 µm et 150 µm et de préférence comprise entre 100 µm et 130 um. La base 9 du liner 8 est recouverte de part et d'autre par une couche polymérique 10 qui peut être formée par un polymère thermoplastique de type polyoléifinique. Chaque couche polymérique 10 présente une épaisseur comprise entre 1 µm et 40 µm, de préférence entre 10 µm et 30 um et de préférence entre 15 µm et 25 um.

Le caractère amovible du liner 8 est dû à la nature d'une face supérieure 11 du liner 8 qui est placée au contact de la couche adhésive 6.

Comme illustré aux figures 1 à 3, une couche superficielle 12 comportant des dérivés de silicone est ménagée à la surface d'une face supérieure 11 du liner 8. De manière connue, les dérivés de silicone présentent des propriétés anti-adhérentes remarquables qui facilitent le retrait du liner 8. Ici, la couche superficielle 12 présente une épaisseur comprise entre 0,1 µm et 10 µm, de préférence entre 0,5 µm et 5 µm, et de préférence entre 0,5 µm et 2,5 µm.

Une telle couche superficielle 12, présente une tension superficielle de surface comprise entre 10 mN/m et 30 mN/m, de préférence la tension superficielle de surface est comprise entre 13 mN/m et 27 mN/m, et de préférence la tension superficielle de surface est comprise entre 15 mN/m et 24 mN/m.

Ces valeurs de tension superficielle de surface sont la source des propriétés anti-adhérentes de la couche superficielle 12 et permettent de séparer le liner 8 de la couche adhésive 6 en y appliquant une force de retrait comprise entre 0,01 N/2,5cm et 2 N/2,5cm, de préférence la force de retrait est comprise entre 0,1 N/2,5cm et 1 N/2,5cm, et de préférence la force de retrait est comprise entre 0,2 N/2,5cm et 0,3 N/2,5cm.

En outre, la face supérieure 11 est de préférence microstructurée. En effet, la face supérieure 11 comporte des microcavités 13 qui sont réparties sur toute la surface de la face supérieure 11.

Les microcavités 13 peuvent être réparties sur la surface de la face supérieure 11 selon un motif aléatoire ou régulier. Un motif régulier peut comprendre des motifs géométriques simples tels qu'un quadrilatère type rectangle ou losange ou des motifs plus complexes.

Dans cet exemple, les microcavités 13 sont espacées d'un interstice surfacique 14 correspondant à une portion de la face supérieure 11 qui sépare les microcavités 13 d'une distance comprise entre 50 µm et 500 um, de préférence d'une distance comprise entre 100 µm et 400 um et de préférence d'une distance comprise entre 150 µm et 300 µm.

Ici, les microcavités 13 sont de forme tronconiques et présentent une ouverture 15 ménagée à la surface de la face supérieure 11 et un fond 16 délimitant inférieurement chaque microcavité 13. Dans le présent exemple, chaque ouverture 15 présente des dimensions supérieures à celles du fond 16. Ici, les microcavités 13 sont ménagées au sein de la face supérieure 11 et s'étendent selon une profondeur comprise entre 5 µm et 50 um et de préférence selon une profondeur comprise entre 10 µm et 25 um.

De plus, l'ouverture 15 présente un diamètre compris entre 10 µm et 80 um, de préférence un diamètre compris entre 20 µm et 60 um et de préférence un diamètre compris entre 30 µm et 50 um. Le fond 16 de chaque microcavité 13 présente des dimensions qui sont inférieures de 5% à 30 %, de préférence inférieures de 10% à 25% et de préférence inférieures de 15% à 20% par rapport aux dimensions de l'ouverture 15. Cette configuration spécifique et ce rapport entre l'ouverture 15 et le fond 16 confèrent à chaque microcavité 13 une forme évasée qui facilite l'insertion et le retrait d'un système de contrôle d'adhésion 17.

Dans le présent exemple, le système de contrôle d'adhésion 17 est formé par de la matière non-adhérente 18 sous forme de particules à l'état solide.

La matière non-adhérente 18 peut être de nature polymérique et choisie de manière non limitative parmi un polymère de type : polyuréthane, polychlorure de vinyle, acryliques et méthacryliques, poly acétate de vinyle, polyéthylène, polypropylène, résine époxydique, polystyrène, ainsi que leurs dérivés.

Comme illustré aux figures 1 à 3, les microcavités 13 contiennent la matière non-adhérente 18. Lorsque la couche adhésive 6 est couchée sur le liner 8, la forme évasée de chaque microcavité 13 permet de placer la matière non-adhérente 18 au contact de la couche adhésive 6 via l'ouverture 15 de chaque microcavité 13.

Lors d'un procédé d'installation du film multicouche 1 sur un objet à recouvrir, un professionnel formé à l'installation de ce type de film multicouche 1, réalise une étape de séparation du liner 8 de la couche adhésive 6. Lors de cette étape de séparation du liner 8, le système de contrôle d'adhésion 17 est transféré depuis le liner 8 vers la face d'adhésion 7 de la couche adhésive 6.

En effet, l'étape de séparation du liner 8 permet de libérer la face d'adhésion 7 de la couche adhésive 6 afin de placer la couche adhésive 6 au contact de l'objet à recouvrir. Lors de l'étape de séparation du liner 8, les propriétés adhésives de la couche adhésive 6 favorisent la rétention la matière non-adhérente 18 au contact de la face d'adhésion 7.

Dans cet exemple, après séparation du liner 8, la matière non-adhérente 18 recouvre de préférence 0,1 à 10 % de la surface de la face d'adhésion 7 de la couche adhésive 6.

Un tel pourcentage de recouvrement de la face d'adhésion 7 par le système de contrôle d'adhésion 17 permet de diminuer la surface de contact entre la face d'adhésion 7 et l'objet à recouvrir entraînant un ralentissement de l'adhésion de la couche adhésive 6 sur l'objet à recouvrir.

Avantageusement, lors d'une étape de pose visant à positionner le film multicouche 1 dans une position déterminée à la surface de l'objet à recouvrir, le système de contrôle d'adhésion 17 diminue la surface de contact entre la face d'adhésion 7 et l'objet à recouvrir ce qui favorise une glissance du film multicouche 1 au contact de la surface de l'objet à recouvrir. Le phénomène de glissance facilite les opérations d'ajustement de la pose et permet d'accélérer le procédé d'installation du film multicouche 1 sans pour autant endommager les propriétés physico-chimiques, mécaniques et visuelles du film multicouche 1.

Lorsque le professionnel est satisfait du positionnement du film multicouche 1, une pression est appliquée au film multicouche 1 de manière à finaliser l'adhésion de la couche adhésive 6 à l'objet à recouvrir. Une telle pression peut être appliquée par des mouvements de va et vient qui permettent également de chasser l'air emprisonné entre la couche adhésive 6 et l'objet à recouvrir. Les mouvements de va et vient peuvent être réalisés à l'aide d'un outil de pose telle qu'une raclette en plastique.

Il est à noter qu'après séparation du liner 8, le motif de répartition de la matière non-adhérente 18 au contact de la face d'adhésion 7 peut permettre dans certain cas l'évacuation de l'air qui se trouve piégé entre le film multicouche 1 et la surface de l'objet à recouvrir. En effet, une répétition du motif de répartition de la matière non-adhérente 18 peut former à la surface de la face d'adhésion 7 des canaux d'évacuation facilitant l'évacuation de l'air lorsque l'installateur applique une pression au passage de la raclette sur le film multicouche 1. En pratique, le motif de répartition de la matière non-adhérente 18 au contact de la face d'adhésion 7 est induit par le motif de répartition des microcavités 13 dans lesquelles était insérée la matière non-adhérente 18 avant l'étape séparation du liner 8.

Comme illustré aux figures 2 et 3, la demanderesse a développé un procédé de fabrication du film multicouche 1 qui comporte une étape de formation du système de contrôle d'adhésion 17. Dans cet exemple, l'étape de formation du système de contrôle d'adhésion 17 comporte une opération de placement sélectif d'une composition polymère de la matière non-adhérente 18 dans des microcavités 13 ménagées sur la face supérieure 11 du liner 8. L'opération de placement sélectif peut être assimilée à une opération de remplissage sélectif des microcavités 13. Le placement sélectif permet de placer sélectivement la composition polymère de la matière non-adhérente 18 à l'état liquide dans les microcavités 13. La composition polymère de la matière non-adhérente 18 à l'état liquide ne reste ainsi pas à la surface des interstices surfaciques 14.

De préférence, l'opération de placement sélectif est réalisée par enduction d'une composition polymère de la matière non-adhérente 18 à l'état liquide sur la face supérieure 11 du liner 8.

Comme indiqué précédemment, la matière non-adhérente 18 peut être de nature polymérique. Ainsi, dans le cadre du procédé de fabrication du film multicouche 1, il est possible d'utiliser au moins trois types de composition polymère de matière non-adhérente 18 à l'état liquide.

Un premier type de composition polymère de la matière non-adhérente 18 peut être formé par un polymère thermoplastique en phase solvant tel qu'un polymère acrylate.

Un deuxième type de composition polymère de la matière non-adhérente 18 peut être formé par des monomères précurseurs d'un polymère non-adhérent à l'état liquide tels que des précurseurs de polyacrylate comprenant des composés de type monomères réticulables sous rayonnement UV et des composés de type photoinitiateurs .

Et un troisième type de composition polymère de la matière non-adhérente 18 peut être formé par un polymère en fusion appelé polymère de type « hot-melts ». Un polymère de type « hot-melt » peut être réalisé à base de polymère de type polyamide, acétate de vinyle éthylène (EVA), polyester, polyoléfine, polyuréthanne.

Dans ce cas, l'enduction de la composition de précurseur de la matière non-adhérente 18 est réalisée à chaud. Dans cet exemple, le polymère à l'état solide subit un changement d'état qui fait suite à une montée en température de manière à atteindre et dépasser son point fusion le faisant passer de l'état solide à l'état liquide. Le polymère en fusion est ensuite maintenue à température de manière réaliser une étape d'enduction optimale.

Dans les trois cas la composition polymère de la matière non-adhérente 18 est adaptée à remplir les microcavités 13 de la face supérieure 11 du liner 8.

Plus particulièrement, dans les deux cas où la composition polymère de la matière non-adhérente 18 se trouve à l'état liquide à température ambiante et de préférence en solution dans des solvants organiques.

Aux fins de remplir les microcavités 13, la composition polymère de la matière non-adhérente 18 est préparée de manière à présenter une tension de surface, en solution dans des solvants organiques, inférieure ou égale à la tension superficielle de surface de la couche superficielle 12.

La composition polymère de la matière non-adhérente 18 est ensuite séchée de façon à évaporer les solvants organiques. Après évaporation des solvants organique, la composition polymère de la matière non-adhérente 18 se trouve à l'état liquide. Parallèlement la composition polymère de la matière non-adhérente 18 présente une tension de surface supérieure ou égale à la tension superficielle de surface de la couche superficielle 12.

Le différentiel de la tension de surface de la composition polymère de la matière non-adhérente 18, après évaporation des solvants organiques, avec la tension superficielle de surface de la couche superficielle 12 génère un phénomène de dé-mouillage, c'est-à-dire, une réduction spontanée de l'aire de contact entre la composition polymère de la matière non-adhérente 18 à l'état liquide et la surface de la couche superficielle 12. Avantageusement, ce phénomène de dé-mouillage favorise la concentration de la composition polymère de matière non-adhérente 18 à l'état liquide dans les microcavités 13 de la face supérieure 11 du liner 8.

Dans cet exemple, la composition polymère de la matière non-adhérente 18 est préparée de manière à présenter, après avoir évaporer les solvants organiques, une tension de surface comprise entre 15 mN/m et 75 mN/m, de préférence la tension de surface est comprise entre 25 mN/m et 65 mN/m et de préférence la tension de surface est comprise entre 30 mN/m et 60 mN/m.

Selon le type de composition polymère de la matière non-adhérente 18 à l'état liquide à température ambiante qui est utilisé, la valeur de la tension de surface de la composition polymère de la matière non-adhérente 18 peut être optimisée au travers de différents paramètres.

Dans le cas d'une composition polymère de la matière non-adhérente 18 formée par un polymère thermoplastique en phase solvant, la valeur de la tension de surface de la composition polymère de la matière non-adhérente 18 peut être optimisée par le choix des solvants organiques et le taux de dilution utilisé. Typiquement un solvant de type éther de glycol peut permettre d'obtenir une tension de surface comprise entre 20 mN/m et 60 mN/m.

Dans le cas d'une composition polymère de la matière non-adhérente 18 qui est formée par des monomères précurseurs d'un polymère non-adhérent, la valeur de la tension de surface de la composition polymère de la matière non-adhérente 18 peut être optimisée par le choix de solvants de type hydrocarbure aliphatique et/ou de solvants de type alcool et/ou de solvants de type siloxane. Typiquement, un mélange de ces solvants peut permettre d'obtenir une tension de surface comprise entre 15 mN/m et 60 mN/m.

Il est à noter que dans les deux cas précités, il est possible d'ajouter à la composition polymère de la matière non-adhérente 18 des composés additionnels tels qu'un agent tensioactif qui permet d'optimiser la tension de surface, notamment en la diminuant. A cet effet, des composés de type tensio-actifs à base de polysiloxane modifié et de polymère fluorocarboné sont connus pour diminuer la tension de surface d'une composition à l'état liquide et conférer à la composition liquide des propriétés de placement sélectif remarquables, c'est-à-dire, la faculté de remplir les microcavités 13.

Comme illustré aux figures 2 et 3, l'opération d'enduction de la composition polymère de la matière non-adhérente 18 est réalisée à l'aide d'un outil d'étalement 19 réglé à une hauteur déterminée de la face supérieure 11 du liner 8. Ici, l'outil d'étalement 19 est formé par une racle. Toutefois, l'outil d'étalement 9 pourrait être formé par tout type d'outil permettant, d'une part, de contraindre à son passage la composition polymère de la matière non-adhérente 18 à remplir et se concentrer uniquement dans les microcavités 13, et d'autre part, à évacuer la composition polymère de la matière non-adhérente 18 des interstices surfaciques 14 de la face supérieure 11 du liner 8 sans endommager la couche superficielle 12 de la face supérieure 11.

Dans le cas d'une composition polymère de la matière non-adhérente 18 de type polymère en fusion, lorsque le polymère en fusion entre au contact de la face supérieure 11 du liner 8, la température du polymère chute rapidement et peut entraîner une augmentation de la viscosité de la composition polymère de la matière non-adhérente 18. Ainsi, afin d'optimiser le remplissage et la concentration de la composition polymère de la matière non-adhérente 18 dans les microcavités 13, l'outil d'étalement 19 peut présenter une fonction chauffante de manière à liquéfier à son passage la composition polymère de la matière non-adhérente 18.

En pratique, la hauteur de l'outil d'étalement 19 par rapport à la face supérieure 11 du liner 8 est déterminée selon plusieurs facteurs tels que la nature de l'outil d'étalement 19, le différentiel de tension de surface entre la couche superficielle 12 de la face supérieure 11 du liner 8 et la tension de surface de la composition polymère de matière non-adhérente 18, le pourcentage massique de matière solide dans la préparation de composition polymère etc.

Selon un premier exemple de réglage de la hauteur de l'outil d'étalement 19, lorsqu'une racle souple en élastomère est utilisée et que la composition polymère de matière non-adhérente 18 et la couche superficielle 12 présentent un différentiel minimum de tension de surface, la racle souple est alors placée à une hauteur nulle de 0 µm pour être au contact de la face supérieure 11 et lécher l'interstice surfacique 14. Dans cet exemple, les propriétés élastomériques de la racle souple lui permettent d'être placée au contact de la couche superficielle 12 sans l'endommager.

Selon un second exemple de réglage de la hauteur de l'outil d'étalement, lorsqu'une racle métallique rigide est utilisée et que la composition polymère de matière non-adhérente 18 et la couche superficielle 12 présentent un différentiel important de tension de surface par exemple supérieur à 40%, la racle est alors placée à une hauteur comprise entre 0 um et 100 um, de préférence la hauteur de la racle est comprise entre 0 um et 10 um, de préférence la hauteur de la racle est comprise entre 0 um et 5 µm et de préférence la hauteur de la racle est comprise 0 µm et 2 µm.

Comme illustré aux figures 1 à 3, lors de l'opération d'enduction la composition polymère de matière non-adhérente 18 forme un ménisque convergent au niveau de l'ouverture 15 de chaque microcavité 13.

Quelque soit le type de composition polymère de la matière non-adhérente 18 utilisée, l'étape de formation du système de contrôle d'adhésion 17 comprend une opération de durcissement de la composition polymère de la matière non-adhérente 18 ayant remplie dans les microcavités 13. Avantageusement, l'opération de durcissement permet de durcir la matière non-adhérente 18 à l'état solide alors qu'elle est insérée dans les microcavités 13.

En effet, dans le cas d'une composition polymère de la matière non-adhérente 18 formée par un polymère thermoplastique en phase solvant, l'opération de durcissement est réalisée par élimination du solvant. Dans ce contexte, l'opération de durcissement est réalisée de préférence par une évaporation physique du solvant qui consiste à diffuser de l'air chaud à la surface de la face supérieure 11 du liner 8.

Dans le cas d'une composition polymère de la matière non-adhérente 18 qui est formée par des monomères précurseurs d'un polymère non-adhérent, l'opération de durcissement est réalisée par une opération de polymérisation des monomères précurseurs du polymère non-adhérent.

Lorsque les monomères précurseurs d'un polymère non-adhérent sont solvatés l'opération de durcissement comporte une opération d'évaporation du ou des solvants qui est suivie de l'opération de polymérisation des monomères. Dans ce cas, l'opération de polymérisation peut être thermo catalysée par diffusion de chaleur et/ou « UV » catalysée par diffusion d'ultraviolets à la surface de la face supérieure 11 du liner 8.

Dans le cas d'une composition polymère de la matière non-adhérente 18 qui est formée par un polymère en fusion à chaud, l'opération de durcissement est réalisée par un retour à température ambiante du polymère en fusion. Le retour à température ambiante du polymère en fusion peut être accélérée par diffusion de froid à la surface de la face supérieure 11 du liner 8. En pratique, le liner 8 enduit de la composition de matière non-adhérente 18 est passé sur un cylindre réfrigéré.

En outre, le procédé de fabrication d'un film multicouche 1 comporte une étape de formation de la couche adhésive 6. Ici, l'étape de formation de la couche adhésive 6 comporte une opération d'enduction d'une formulation de polymère adhésif.

La formulation de polymère adhésif est enduite à l'état liquide sur la face supérieure 11 du liner 8. A ces fins, un outil d'étalement 19 tel qu'une barre de Meyer, une racle, un cylindre ou toute forme de système apte à enduire une couche mince et continue, est utilisée pour enduire la formulation de polymère adhésif sur la face supérieure 11. Afin d'obtenir une couche d'adhésif 6 comprise entre 10 µm et 60 um d'épaisseur à l'état solide, l'outil d'étalement 19 est réglé à une hauteur de la face supérieure 11 comprise entre 60 um et 300 um.

Avantageusement, lors de l'opération d'enduction de la formulation de polymère adhésif, la formulation de polymère adhésif entre au contact de la matière non-adhérente 18 insérée à l'état solide dans les microcavités 13. En effet, la formulation de polymère adhésif comble un espace libre de la microcavité 13 ménagé au niveau de chaque ouverture 15 supérieurement au ménisque convergent.

L'étape de formation de la couche adhésive comporte également une étape de durcissement de la formulation de polymère adhésif. La réalisation de l'étape de durcissement dépend du type de formulation de polymère adhésif utilisé.

Dans le cas d'une formulation de polymère adhésif formée par un polymère thermoplastique en phase solvant, l'opération de durcissement est réalisée par élimination du solvant. Dans ce cas, l'élimination du solvant est de préférence réalisée par évaporation physique du solvant qui s'apparente à une diffusion d'air chaud appliquée à la formulation de polymère adhésif enduite sur le liner 8.

Dans le cas d'une formulation de polymère adhésif formée par des monomères précurseurs d'adhésif, l'opération de durcissement est réalisée par une opération de polymérisation des monomères précurseurs d'adhésif. Dans ce cas, l'opération de polymérisation peut être thermo catalysée par diffusion de chaleur et/ou « UV » catalysée par diffusion d'ultraviolets appliqués à la formulation de polymère adhésif enduite sur le liner 8.

Dans le cas d'une formulation de polymère adhésif formée par un polymère en fusion à chaud, l'opération de durcissement est réalisée par un retour à température ambiante du polymère en fusion. Le retour à température ambiante du polymère en fusion peut être accéléré par diffusion de froid à la surface de la face supérieure 11 du liner 8. En pratique, le liner 8 enduit de la formulation de polymère adhésif est passé sur un cylindre réfrigéré.

Le procédé de fabrication du film multicouche 1 comporte également une étape de formation du corps 3 du film par couchage d'une couche polymérique principale 2 sous forme de film coulé sur la face de liaison 5 de la couche adhésive 6. De préférence, une couche polymérique principale 2 est couchée par laminage à l'aide d'un outil d'étalement 19 tel qu'une barre de Meyer.

Il est à noter qu'un film coulé correspond à un film polymérique obtenu par enduction d'un polymère mis en suspension ou en solution dans un solvant et/ou un plastifiant.

Comme indiqué précédemment, la couche polymérique principale 2 formant le corps 3 du film peut être de type polychlorure de vinyle, polyuréthane, polyoléfine et acrylique. Par ailleurs, il est tout à fait possible de laminer un film commercial conditionné en rouleau afin de former le corps 3 du film.

### Exemple 1 :

Dans ce premier exemple de réalisation de l'invention, la composition polymère de la matière non-adhérente 18 est obtenue à partir d'une solution d'un polymère méthyl méthacrylique thermoplastique en phase solvant.

Le polymère méthyl méthacrylate thermoplastique est solvatée à l'aide d'un mélange de solvant comportant de l'acétate d'éthyle et du 1-métoxy-2-propanol.

Ainsi, la composition polymère de méthyl méthacrylate comporte :

**Tableau 1 : Composition polymère de méthyl méthacrylate thermoplastique**

| Nature | Désignation/ Fournisseur | Pourcentage massique en % |
|---|---|---|
| Polymère méthyl métacrylate | DIANAL BR-87, UNIPEX | 12,51 |
| Solvant 1 | Acétate d'éthyle | 37,55 |
| Solvant 2 | 1-Métoxy-2-propanol | 49,94 |
| | | 100 |

Ici, le 1-métoxy-2-propanol présente une tension superficielle de 71 mN/m et permet de moduler la tension superficielle de la formule entre la valeur de tension superficielle basse générée par l'acétate d'éthyle 23 mN/m et la tension superficielle de la couche superficielle 12 générant le phénomène de dé-mouillage de la composition polymère de la matière non-adhérente 18. Ainsi, en faisant varier le ratio acétate d'éthyle/1-métoxy-2-propanol il est possible de s'adapter à différentes tensions de surface de la couche superficielle 12 de la face supérieure 11 du liner 8.

Le polymère méthyl méthacrylique thermoplastique en phase solvant est enduit à l'aide d'un outil d'étalement 19 formé par une racle souple passée au contact de la face supérieure 11 et de ses interstices surfaciques 14. La racle souple contraint le polymère méthyl méthacrylique thermoplastique en phase solvant à remplir dans les microcavités 13.

Le polymère méthyl méthacrylique thermoplastique en phase solvant à l'intérieur des microcavités 13 est durci par évaporation du mélange acétate d'éthyle/1-métoxy-2-propanol lors d'un passage dans une étuve pendant 3 minutes à 110°C puis refroidi 15 minutes à température ambiante.

La formulation de polymère adhésif comporte un polymère acrylique modifié par l'ajout d'une résine tackifiante à base de dérivés de colophane. Ici, le polymère acrylique modifié est livré à l'état de solution par un fournisseur et comporte un extrait sec de 49%.

La formulation de polymère adhésif acrylique est solvatée avec de l'acétate d'éthyle et de l'heptane de la manière suivante :

**Tableau 2 : Formulation de polymère adhésif acrylique**

| Nature | Désignation/ fournisseur | Pourcentage massique en % |
|---|---|---|
| Polymère acrylique modifié | Aroset S390, ASHLAND | 50,00 |
| Solvant 1 | Acétate d'éthyle | 40,00 |
| Solvant 2 | Heptane | 10,00 |
| | | 100 |

La formulation de polymère adhésif à l'état liquide est enduite à la surface de la face supérieure 11 du liner 8 en utilisant une barre de Meyer.

La formulation de polymère adhésif à l'état liquide enduite sur le liner 8 est durcie par séchage dans une étuve pendant 3 minutes à 110°C de manière à former la couche adhésive 6.

Sans attendre le retour à température ambiante du complexe liner/adhésif, le corps 3 du film est formé. A cet effet, un film de PVC coulé ou calandré est laminé sur la face d'adhésion 7 de la couche adhésive 6.

### Exemple 2 :

Dans le second exemple de réalisation de l'invention, la composition polymère de la matière non-adhérente 18 comporte des monomères précurseurs acryliques dont la polymérisation est UV catalysée.

La composition polymère de la matière non-adhérente 18 est solvatée dans un mélange solvant comportant de l'alcool isopropylique et de l'heptane de la manière suivante :

**Tableau 3 : Composition de monomères précurseurs acryliques**

| Nature | Désignation/ fournisseur | Pourcentage massique en % |
|---|---|---|
| Photo-initiateur à base de benzophénone | Darocur BP, BASF | 1,76 |
| Diluant réactif di fonctionnel | Laromer HDDA, BASF | 7,03 |
| Monomères précurseurs d'acrylique | Pentaérythritol tri et tétra acrylate | 22,84 |
| Co-initiateur de polymérisation | Ebecryl 7100, ALLNEX | 3,51 |
| Agent tensioactif | Tego Twin 4100, EVONIK | 2,01 |
| Solvant 1 | Alcool isopropylique | 48,69 |
| Solvant 2 | Heptane | 14,16 |
| | | 100 |

Il est à noter que dans cette composition de précurseurs de la matière non-adhérente 18 le composé photo-initiateur permet d'initier la réaction de polymérisation en transformant des photons UV en radicaux libres.

De la même manière, le composé co-initiateur permet de générer des radicaux libres lorsqu'il perçoit des photons UV. Toutefois, le composé co-initiateur est bien plus sensible que le photo-initiateur et permet de polymériser les monomères qui se trouvent en profondeur de la composition polymère de la matière non-adhérente 18.

En outre, le diluant réactif di fonctionnel permet d'abaisser la viscosité de la composition polymère de matière non-adhérente 18 et participe à la réaction de polymérisation sans rigidifier la chaîne.

L'agent tension actif permet de faire baisser la tension de surface de la composition polymère de la matière non-adhérente 18 et ainsi de favoriser le phénomène de dé-mouillage.

Ici, l'alcool isopropylique présente une tension superficielle de 23 mN/m et l'Heptane une tension superficielle 20 mN/m qui permettent de contrôler le niveau de tension superficielle de la solution. L'agent tensio-actif permet de faire baisser la tension de surface de la composition polymère de la matière non-adhérente 18 et de favoriser le phénomène de placement ou de capacité à remplir les microcavités 13.

Afin de former le système de contrôle d'adhésion 17 constitué par des particules d'acrylique, la composition polymère de la matière non-adhérente 18 est enduite à l'aide d'une racle souple passée en contact de la face supérieure 11 et de ses interstices surfaciques 14. La racle souple au contact du liner 8 contraint la composition polymère de la matière non-adhérente 18 à remplir les microcavités 13.

La composition polymère de la matière non-adhérente 18 contenue dans les microcavités 13 du liner 8 est durcie par séchage dans une étuve pendant 3 minutes à 110°C puis refroidie 15 minutes à température ambiante.

La polymérisation de la composition polymère de la matière non-adhérente 18 insérée et séchée dans les microcavités 13 est réalisée sous lampes UV avec une irradiation de 2.3 j/cm².

En outre, les étapes de formation de la couche adhésive 6 et du corps 3 du film suivent le même mode opératoire et les mêmes composés que ce décrit dans l'exemple 1.

## Revendications

1. Procédé de fabrication d'un film multicouche (1) de recouvrement qui comporte une couche adhésive (6) sensible à la pression protégée par un liner (8) qui est équipé d'un système de contrôle d'adhésion (17),
le procédé comportant une étape de formation du système de contrôle d'adhésion (17) qui comprend une opération de placement sélectif d'une composition polymère d'une matière non-adhérente (18) dans des microcavités (13) ménagées sur une face (11) du liner (8), **caractérisé en ce que** l'opération de placement sélectif est réalisée par enduction à l'aide d'un outil d'étalement (19) réglé à une hauteur déterminée de la face (11) du liner (8), afin que l'outil d'étalement (19) contraigne, à son passage, la composition de la matière non-adhérente (18) à remplir et se concentrer uniquement dans les microcavités (13).

2. Procédé de fabrication d'un film multicouche (1) selon la revendication 1, **caractérisé en ce que** l'étape de formation du système de contrôle d'adhésion (17) comprend une opération de durcissement de la composition polymère de la matière non-adhérente (18) qui se solidifie alors qu'elle est placée dans les microcavités (13) de la face (11) du liner (8).

3. Procédé de fabrication d'un film multicouche (1) selon l'une quelconque des revendications 1 et 2, **caractérisé en ce que** l'outil d'étalement (19) est réglé à une hauteur de la face (11) du liner (8) qui est comprise entre 0 um et 100 um, de préférence l'outil d'étalement est réglé à une hauteur de la face (11) du liner (8) comprise entre 0 um et 10 um, de préférence l'outil d'étalement est réglé à une hauteur de la face (11) du liner (8) comprise entre 0 um et 5 um et de préférence l'outil d'étalement est réglé à une hauteur de la face (11) du liner (8) comprise entre 0 µm et 2 um.

4. Procédé de fabrication d'un film multicouche (1) selon l'une des revendications 1 à 3, **caractérisé en ce que** la composition polymère de la matière non-adhérente (18) présente une tension de surface faible qui est comprise entre 10 mN/m et 60 mN/m.

5. Procédé de fabrication d'un film multicouche (1) selon l'une des revendications 1 à 4, **caractérisé en ce que** la composition polymère de la matière non-adhérente (18) est formée par un polymère thermoplastique en phase solvant.

6. Procédé de fabrication d'un film multicouche (1) selon les revendications 2 et 5, **caractérisé en ce que** l'opération de durcissement de la composition polymère de la matière non-adhérente (18) est réalisée par élimination du solvant, de préférence l'élimination du solvant résulte d'une évaporation par séchage physique du solvant.

7. Procédé de fabrication d'un film multicouche (1) selon l'une des revendications 1 à 4, **caractérisé en ce que** la composition polymère de la matière non-adhérente (18) comporte des monomères précurseurs d'un polymère non-adhérent .

8. Procédé de fabrication d'un film multicouche (1) selon les revendications 2 et 7, **caractérisé en ce que** l'opération de durcissement de la composition polymère de polymérisation des monomères précurseurs du polymère non-adhérent.

9. Procédé de fabrication d'un film multicouche (1) selon l'une des revendications 7 et 8, **caractérisé en ce que** l'opération de polymérisation est réalisée par réticulation, de préférence la réticulation UV catalysée.

10. Procédé de fabrication d'un film multicouche (1) selon l'une des revendications 1 à 4, **caractérisé en ce que** la composition polymère de la matière non-adhérente (18) est formée par un polymère en fusion.

11. Procédé de fabrication d'un film multicouche (1) selon les revendications 2 et 10, **caractérisé en ce que** l'opération de durcissement est réalisée par refroidissement du polymère en fusion.

12. Procédé de fabrication d'un film multicouche (1) selon l'une des revendications 1 à 11, **caractérisé en ce qu'**il comporte, d'une part, une étape de formation de la couche adhésive (6) qui est de préférence réalisée par enduction d'une formulation de polymère adhésif sur le liner (8) qui est équipé du système de contrôle d'adhésion (17), et d'autre part, une opération de durcissement de la formulation de polymère adhésif.

13. Procédé de fabrication d'un film multicouche (1) selon l'une des revendications 1 à 12, **caractérisé en ce qu'**il comporte une étape de formation d'une couche polymérique (2) formant un corps (3) du film, l'étape de formation de la couche polymérique (2) étant de préférence réalisée par couchage d'un film coulé.

## Patentansprüche

1. Verfahren zum Herstellen einer mehrschichtigen Abdeckfolie (1), die eine druckempfindliche Haftschicht (6) aufweist, die durch einen Liner (8) geschützt ist, der mit einem Haftfestigkeitskontrollsystem (17) ausgerüstet ist,
wobei das Verfahren einen Schritt eines Ausbildens des Haftfestigkeitskontrollsystems (17) aufweist, der einen Vorgang zum wahlweisen Platzieren einer Polymerzusammensetzung aus einem nicht haftenden Material (18) in Mikrohohlräume (13) umfasst, die auf einer Fläche (11) des Liners (8) angeordnet sind,
**dadurch gekennzeichnet, dass** der Vorgang des wahlweisen Platzierens durch Bestreichen mittels eines Verteilwerkzeugs (19) durchgeführt wird, das auf eine bestimmte Höhe der Fläche (11) des Liners (8) eingestellt ist, damit das Verteilwerkzeug (19) bei seinem Durchlauf die Zusammensetzung aus dem nicht haftenden Material (18) dazu zwingt, die Mikrohohlräume (13) zu füllen und sich nur darin zu konzentrieren.

2. Verfahren zum Herstellen einer mehrschichtigen Folie (1) nach Anspruch 1, **dadurch gekennzeichnet, dass** der Schritt des Ausbildens des Haftfestigkeitskontrollsystems (17) einen Vorgang eines Aushärtens der Polymerzusammensetzung aus dem nicht haftenden Material (18) umfasst, die sich verfestigt, wenn sie in die Mikrohohlräume (13) der Fläche (11) des Liners (8) platziert wird.

3. Verfahren zum Herstellen einer mehrschichtigen Folie (1) nach einem der Ansprüche 1 und 2, **dadurch gekennzeichnet, dass** das Verteilwerkzeug (19) auf eine Höhe der Fläche (11) des Liners (8) eingestellt wird, die zwischen 0 µm und 100 µm liegt, vorzugsweise das Verteilwerkzeug auf eine Höhe der Fläche (11) des Liners (8) eingestellt wird, die zwischen 0 µm und 10 µm liegt, vorzugsweise das Verteilwerkzeug auf eine Höhe der Fläche (11) des Liners (8) eingestellt wird, die zwischen 0 µm und 5 µm liegt, und vorzugsweise das Verteilwerkzeug auf eine Höhe der Fläche (11) des Liners (8) eingestellt wird, die zwischen 0 µm und 2 µm liegt.

4. Verfahren zum Herstellen einer mehrschichtigen Folie (1) nach einem der Ansprüche 1 bis 3, **dadurch gekennzeichnet, dass** die Polymerzusammensetzung aus dem nicht haftenden Material (18) eine geringe Oberflächenspannung vorweist, die zwischen 10 mN/m und 60 mN/m liegt.

5. Verfahren zum Herstellen einer mehrschichtigen Folie (1) nach einem der Ansprüche 1 bis 4, **dadurch gekennzeichnet, dass** die Polymerzusammensetzung aus dem nicht haftenden Material (18) aus einem thermoplastischen Polymer in flüssiger Phase ausgebildet ist.

6. Verfahren zum Herstellen einer mehrschichtigen Folie (1) nach den Ansprüchen 2 und 5, **dadurch gekennzeichnet, dass** der Vorgang des Aushärtens der Polymerzusammensetzung aus dem nicht haftenden Material (18) durch eine Entfernung des Lösungsmittels durchgeführt wird, wobei sich vorzugsweise die Entfernung des Lösungsmittels aus einer Verdunstung durch physisches Trocknen des Lösungsmittels ergibt.

7. Verfahren zum Herstellen einer mehrschichtigen Folie (1) nach einem der Ansprüche 1 bis 4, **dadurch gekennzeichnet, dass** die Polymerzusammensetzung aus dem nicht haftenden Material (18) Vorläufermonomere eines nicht haftenden Polymers umfasst.

8. Verfahren zum Herstellen einer mehrschichtigen Folie (1) nach den Ansprüchen 2 und 7, **dadurch gekennzeichnet, dass** der Vorgang des Aushärtens der Polymerzusammensetzung einer Polymerisation von Vorläufermonomeren des nicht haftenden Polymers.

9. Verfahren zum Herstellen einer mehrschichtigen Folie (1) nach einem der Ansprüche 7 und 8, **dadurch gekennzeichnet, dass** der Vorgang der Polymerisation durch eine Vernetzung, vorzugsweise durch eine UV-katalysierte Vernetzung durchgeführt wird.

10. Verfahren zum Herstellen einer mehrschichtigen Folie (1) nach einem der Ansprüche 1 bis 4, **dadurch gekennzeichnet, dass** die Polymerzusammensetzung aus dem nicht haftenden Material (18) aus einer Polymerschmelze ausgebildet ist.

11. Verfahren zum Herstellen einer mehrschichtigen Folie (1) nach den Ansprüchen 2 und 10, **dadurch gekennzeichnet, dass** der Vorgang des Aushärtens durch eine Abkühlung der Polymerschmelze durchgeführt wird.

12. Verfahren zum Herstellen einer mehrschichtigen Folie (1) nach einem der Ansprüche 1 bis 11, **dadurch gekennzeichnet, dass** es einerseits einen Schritt des Ausbildens der Haftschicht (6), der vorzugsweise durch das Streichen einer haftenden Polymerformulierung auf den Liner (8) durchgeführt wird, der mit dem Haftfestigkeitskontrollsystem (17) ausgerüstet ist, und andererseits einen Vorgang des Aushärtens der haftenden Polymerformulierung aufweist.

13. Verfahren zum Herstellen einer mehrschichtigen Folie (1) nach einem der Ansprüche 1 bis 12, **dadurch gekennzeichnet, dass** es einen Schritt des Ausbildens einer Polymerschicht (2) aufweist, die einen Körper (3) der Folie ausbildet, wobei der Schritt des Ausbildens der Polymerschicht (2) vorzugsweise durch Beschichten einer Gießfolie durchgeführt wird.

## Claims

1. Method for producing a multilayer covering film (1) which comprises a pressure sensitive adhesive layer (6) protected by a liner (8) which is equipped with a system (17) for controlling adhesion, the method comprising a step of forming the adhesion control system (17) which includes an operation of selectively positioning a polymer composition of a non-adhesive material (18) in microcavities (13) provided on one face (11) of the liner (8),
**characterized in that** the selective positioning operation is carried out by coating using a spreading tool (19) adjusted to a determined height from the face (11) of the liner (8) so that, when it passes, the spreading tool (19) forces the composition of the non-adhesive material (18) to fill and concentrate only in the microcavities (13).

2. Method for producing a multilayer film (1) according to claim 1, **characterized in that the** step of forming the adhesion control system (17) comprises an operation of hardening the polymer composition of the non-adhesive material (18) which solidifies while in the microcavities (13) on the face (11) of the liner (8).

3. Method for producing a multilayer film (1) according to one of claims 1 and 2, **characterized in that** the spreading tool (19) is adjusted to a height from the face (11) of the liner (8) which is between 0 µm and 100 µm, preferably the spreading tool is adjusted to a height from the face (11) of the liner (8) of between 0 µm and 10 µm, preferably the spreading tool is adjusted to a height from the face (11) of the liner (8) of between 0 µm and 5 µm and preferably the spreading tool is adjusted to a height from the face (11) of the liner (8) of between 0 µm and 2 µm.

4. Method for producing a multilayer film (1) according to one of claims 1 to 3, **characterized in that** the polymer composition of the non-adhesive material (18) has a low surface tension which is between 10 mN/m and 60 mN/m.

5. Method for producing a multilayer film (1) according to one of claims 1 to 4, **characterized in that** the polymer composition of the non-adhesive material (18) is made from a thermoplastic polymer in solvent phase.

6. Method for producing a multilayer film (1) according to claims 2 and 5, **characterized in that** the operation of hardening the polymer composition of the non-adhesive material (18) is carried out by removing the solvent, preferably removing the solvent as a result of evaporation by physically drying the solvent.

7. Method for producing a multilayer film (1) according to one of claims 1 to 4, **characterized in that** the polymer composition of the non-adhesive material (18) comprises precursor monomers of a non-adhesive polymer.

8. Method for producing a multilayer film (1) according to claims 2 and 7, **characterized in that** the operation of hardening the polymer composition polymerizing the precursor monomers of the non-adhesive polymer.

9. Method for producing a multilayer film (1) according to one of claims 7 and 8, **characterized in that** the polymerization operation is carried out by crosslinking, preferably UV-catalyzed crosslinking.

10. Method for producing a multilayer film (1) according to one of claims 1 to 4, **characterized in that** the polymer composition of the non-adhesive material (18) is made of a hot-melt polymer.

11. Method for producing a multilayer film (1) according to claims 2 and 10, **characterized in that** the hardening operation is carried out by cooling the hot-melt polymer.

12. Method for producing a multilayer film (1) according to one of claims 1 to 11, **characterized in that** it comprises a step of forming the adhesive layer (6), said step preferably being carried out by coating the liner (8), which is equipped with the adhesion control system (17), with an adhesive polymer formulation, and an operation of hardening the adhesive polymer formulation.

13. Method for producing a multilayer film (1) according to one of claims 1 to 12, **characterized in that** it comprises a step of forming a polymeric layer (2) forming a body (3) of the film, the step of forming the polymeric layer (2) preferably being carried out by laying a cast film.
